# EUROPÄISCHE PATENTSCHRIFT

(11) **EP 1 716 026 B1**
(45) Veröffentlichungstag und Bekanntmachung des Hinweises auf die Patenterteilung: **13.05.2009**
(21) Anmeldenummer: 04804834.2
(22) Anmeldetag: 15.12.2004
(51) Int. Cl.: B60S 1/04

(54) **SCHEIBENWISCHVORRICHTUNG**
WINDSCREEN WIPER DEVICE
DISPOSITIF ESSUIE-GLACE

(30) Priorität: 10.02.2004 DE 102004006340
(43) Veröffentlichungstag der Anmeldung: 02.11.2006
(73) Patentinhaber: ROBERT BOSCH GMBH, 70442 Stuttgart (DE)
(72) Erfinder: HAWIGHORST, Achim, 77830 Buehlertal (DE)
(86) Internationale Anmeldenummer: PCT/EP2004/053479
(87) Internationale Veröffentlichungsnummer: WO 2005/080155

(56) Entgegenhaltungen:
- EP-A- 1 215 094
- FR-A- 2 840 270
- US-B1- 6 564 420
- PATENT ABSTRACTS OF JAPAN Bd. 1999, Nr. 11, 30. September 1999 (1999-09-30) & JP 11 165613 A (TOYOTA MOTOR CORP), 22. Juni 1999 (1999-06-22)

## Beschreibung

Die Erfindung betrifft eine Scheibenwischvorrichtung, insbesondere für ein Kraftfahrzeug, mit mindestens einem Wischarm, der mit mindestens einem Arretierelement an einer Welle arretiert ist.

Fußgänger sind beim Zusammenstoß mit Fahrzeugen völlig ungeschützt. Besonders die unnachgiebigen, harten Teile unterhalb der Motorhaube führen oft zu schweren Verletzungen beim Aufprall eines Fußgängers auf ein Fahrzeug. Die Scheibenwischvorrichtung befindet sich in einem Bereich, in dem Fußgänger beim Aufprall auf ein Fahrzeug häufig auftreffen. Die allgemein aus dem Stand der Technik bekannten Scheibenwischvorrichtungen haben den Nachteil, dass sie eine große Verletzungsgefahr für den Fußgänger beim Aufprall auf das Fahrzeug darstellen.

Aus dem US-Patent US 6,564,420 B1 dem Oberbegriff entsprechend ist eine Scheibenwischvorrichtung bekannt. Die Scheibenwischvorrichtung weist einen Wischarm auf, der über ein Verbindungselement mit der Drehwelle fest verbunden ist. Das Verbindungselement weist eine Buchse auf, die drehfest an der Welle befestigt ist. Die Buchse ist über Verbindungselemente mit dem Verbindungsteil verbunden. Bei einer zu hohen Drehmomentbelastung der Buchse brechen die Verbindungselemente, sodass das Verbindungsteil und der Wischarm von der Welle gelöst ist.

Aus FR 2 840 270 A ist ebenfalls eine Scheibenwischvorrichtung bekannt, bei der ein Verbindungselement vorgesehen ist, das bei einer hohen Belastung zerstörbar ist.

Aus EP 1 215 094 A ist eine Scheibenwischvorrichtung bekannt, bei der ein Wischarm über eine Hülse mit einer Antriebswelle verbunden ist. Nach einem Aufprall eines Fußgängers auf den Scheibenwischer kann die Hülse aufbrechen und somit der Scheibenwischer nachgeben.

Aus JP 11165613 A ist eine Scheibenwischvorrichtung bekannt, die in der Weise ausgebildet ist, um Energie bei der Belastung des Scheibenwischers aufzunehmen. Dazu ist der Scheibenwischer mit einer Drehachse in einem Drehpunkt gelagert. Die Drehachse ist in einer feststehenden Hülse eingebracht, wobei die Drehachse mit der Hülse über eine Stemmkante verbunden ist. Wird eine zu hohe Last auf die Drehachse ausgeübt, so kann die Drehachse in die Hülse eingeschoben werden, indem die Stemmkante gelöst wird.

Die Erfindung hat die Aufgabe, eine Scheibenwischvorrichtung der eingangs genannten Art dahingehend zu verbessern, dass zukünftig die Verletzungsgefahr für einen Fußgänger beim Aufprall auf ein Fahrzeug reduziert wird.

Die Erfindung löst die gestellte Aufgabe durch eine Scheibenwischvorrichtung mit den Merkmalen des Hauptanspruchs. Dadurch kann der mindestens eine Wischarm beim Aufprall nachgeben, sodass das Verletzungsrisiko für den Fußgänger reduziert wird.

Der erfindungsgemäße Wischarm weist eine über die Welle steckbare Hülse auf. Die Länge der Hülse entspricht ungefähr einem Verschiebeweg des Wischarms beim Aufprall. Beim Aufprall wird die Welle entsprechend dem möglichen Verschiebeweg in die Hülse hineingeschoben. Je länger die Hülse ist, umso größer ist auch der Verschiebeweg. Die Länge der Hülse kann abhängig von den Platzverhältnissen individuell an den jeweiligen Fahrzeugtyp angepasst werden. Deshalb können die Welle und ein Wischermotor für alle Fahrzeugtypen einheitliche Bauteile sein, wodurch Kosten eingespart werden.

Damit ein Drehmoment von der Welle auf den Wischarm zuverlässig übertragen werden kann, kann die Welle mit dem mindestens einen Wischarm formschlüssig und/oder kraftschlüssig verbunden sein.

In einer Weiterbildung der Erfindung kann zwischen der Welle und der Hülse ein Formteil angeordnet sein. Das Formteil erzeugt einen Formschluss zwischen der Hülse und der Welle. Wenn das Formteil ein Ring ist, der an seinem Außenumfang scharfkantige Zähne aufweist, können sich bei der Montage des Wischarms auf die Welle die Zähne in die Hülse eingraben. Das Montagepersonal kann den Wischarm bei seiner Montage zunächst in seine optimale Parkposition ausrichten, und ihn anschließend auf die scharfkantigen Zähne des Rings aufdrücken, wodurch der Wischarm in seiner optimalen Position fixiert wird. In einer besonderen Ausgestaltung kann das Formteil auch einstückig mit der Welle ausgebildet sein. Dann kann die Welle in einem bestimmten Bereich beispielsweise eine Rändelung aufweisen.

Der Durchmesser der Welle kann einen Absatz aufweisen, auf dem ein Innenrand der Hülse abstützbar ist. Auf diese Weise bilden der Absatz und der Innenrand in Richtung der Aufprallkraft ebenfalls einen die Hülse an der Welle arretierenden Formschluss. Der Innenrand der Hülse bildet eine Sollbruchstelle. Beim Aufprall einer Person auf den Wischarm schert der Innenrand von der Hülse ab, sodass sich die Hülse in Aufprallrichtung über die Welle schieben kann.

Um den mindestens einen Wischarm in beiden axialen Richtungen der Welle sichern zu können, kann der mindestens eine Wischarm mit der Welle durch eine Verschraubung kraftschlüssig verbunden sein.

Aus diesem Grund weist die Welle zweckmäßigerweise eine Gewindebohrung oder einen ein Außengewinde aufweisenden Abschnitt auf.

Wenn ein Schraubenkopf oder eine Mutter auf dem Formteil anliegt, kann das Formteil beim Anziehen einer Schraube oder der Mutter mühelos in den Wischarm eingedrückt werden.

In einer anderen bevorzugten Ausführungsform kann durch die Hülse und/oder die Welle ein Stift gesteckt sein. Der Stift arretiert die Hülse an der Welle. Beim Aufprall einer Person auf den Wischarm schert der Stift ab, sodass sich die Hülse über die Welle schieben kann. Um das Abscheren des Stifts zu begünstigen, kann der Stift in seinem beim Aufprall am meisten beanspruchten Bereich eine Sollbruchstelle aufweisen.

Ebenso ist es möglich, dass ein Federelement die Welle mindestens teilweise umgreift, wobei das Federelement die Hülse mit der Welle in axialer Richtung arretiert. Beim Aufprall einer Person auf den Wischarm wird das Federelement zerstört. Um beim Aufprall die Zerstörung zu erleichtern, kann das Federelement eine Sollbruchstelle besitzen.

Abhängig von den beim Aufprall wirkenden Kräften und der Dimensionierung des Stifts und/oder des Federelements kann der Stift und/oder das Federelement aus Kunststoff oder aus Metall gefertigt sein.

In der Hülse kann eine Entlüftungsöffnung vorgesehen sein. Dadurch kann beim Aufpressen des Wischarms auf die Welle während der Montage und beim Aufprall einer Person auf den Wischarm die in der Hülse vorhandene Luft entweichen.

Nachfolgend werden verschiedene Ausführungsbeispiele der erfindungsgemäßen Scheibenwischvorrichtung anhand der beiliegenden Zeichnungen näher erläutert.

Im Einzelnen zeigen:
- Fig. 1: eine Schnittansicht durch eine erste Ausfüh- rungsform der Scheibenwischvorrichtung;
- Fig. 2a: einen Schnitt durch eine erste Ausführungsform des Formteils;
- Fig. 2b: einen Schnitt durch eine zweite Ausführungs- form des Formteils;
- Fig. 2c: einen Schnitt durch eine dritte Ausführungs- form des Formteils;
- Fig. 2d: einen Schnitt durch eine vierte Ausführungs- form des Formteils;
- Fig. 2e: einen Schnitt durch eine fünfte Ausführungs- form des Formteils;
- Fig. 3: eine Schnittansicht durch eine weitere Ausfüh- rungsform der Scheibenwischvorrichtung;
- Fig. 4: einen Schnitt durch die Welle mit einer ersten Verstiftungsmöglichkeit;
- Fig. 5a: einen Schnitt durch die Welle mit einer zwei- ten Verstiftungsmöglichkeit;
- Fig. 5b: einen Längsschnitt durch die Welle aus Fig. 5a;
- Fig. 6: einen Schnitt durch die Welle und eine erste Ausführungsform des Federelements;
- Fig. 7a: eine Schnitt durch die Welle und eine zweite Ausführungsform des Federelements;
- Fig. 7b: einen Längsschnitt durch die Welle aus Fig. 7a.

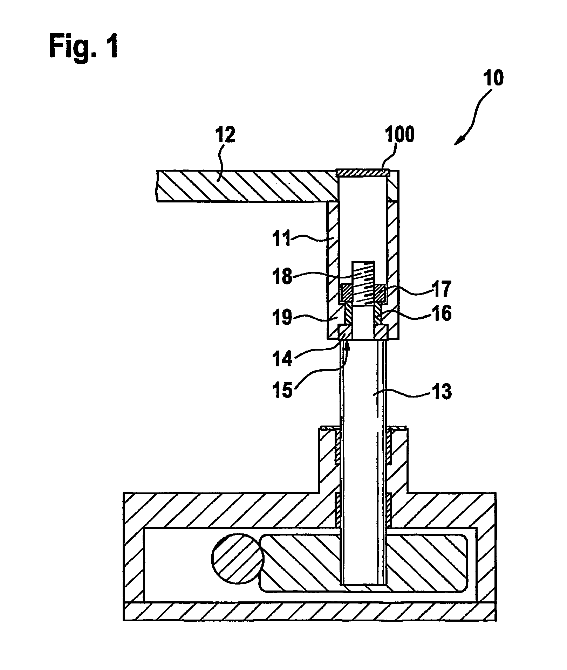

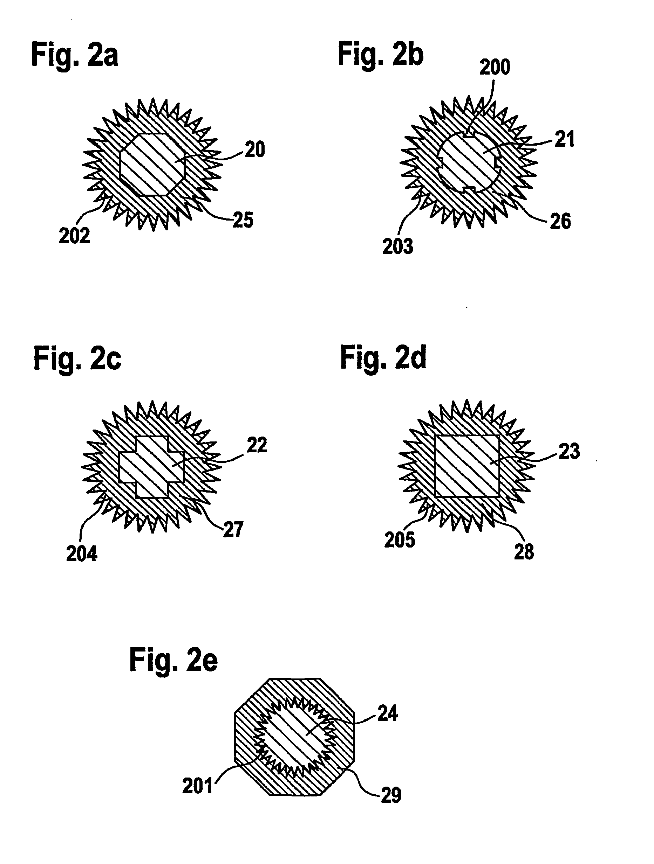

Fig. 1 zeigt eine Scheibenwischvorrichtung 10, bei der eine Hülse 11 eines Wischarms 12 über eine Welle 13 gesteckt ist. Die Hülse 11 ist mit einem Innenrand 14 versehen, der auf einem Absatz 15 der Welle 13 aufliegt, und somit die Hülse an der Welle von oben nach unten arretiert. Wenn bei einem Aufprall einer Person auf den Wischarm 12 eie Kraft von oben auf den Wischarm 12 wirkt, schert der Innenrand 14 von der Hülse 11 ab. Folglich werden die Hülse 11 und der Wischarm 12 nach unten verschoben, so dass der Wischarm 12 nachgiebt, und das Verletzungsrisiko der auf den Wischarm 12 aufprallenden Person reduziert wird. Zwischen der Welle 13 und der Hülse 11 ist ein Formteil 16 (siehe Fign. 2a bis 2e) angeordnet. Das Formteil 16 weist an seinem Außenumfang eine scharfkantige Verzahnung auf. Beim Verschrauben einer Mutter 17 mit einem ein Außengewinde aufweisenden Abschnitt 18 wird die scharfkantige Verzahnung des Formteils 16 in die Hülse 11 eingedrückt. Die Hülse 11 weist deshalb im Bereich des Formteils 16 einen Bereich 19 mit einem geringeren Innendurchmesser auf. Außerdem weist das Formteil 16 eine an die Außenkontur der Welle 13 angepasste Innenkontur auf. Dadurch ist zwischen dem Formteil 16 und der Welle 13 ebenfalls eine formschlüssige Verbindung hergestellt. Durch die formschlüssige Verbindung zwischen der Welle 13 und dem Formteil 16 und dem Formteil 16 und der Hülse 11 kann ein Drehmoment zuverlässig von der Welle 13 auf den Wischarm 12 übertragen werden. Ferner weist der Wischarm 12 eine mit einer Verschlusskappe 100 verschlossene Öffnung auf. Durch sie kann der Wischarm 12 mit der Welle 13 verschraubt werden.

Die Fign. 2a bis 2e zeigen verschiedene Ausführungsformen von Wellen 20, 21, 22, 23 und 24 und verschiedene Ausführungsformen von Formteilen 25, 26, 27, 28 und 29. Wie dargestellt, weist die Welle 20 einen vieleckigen Querschnitt auf oder die Welle 23 besitzt einen viereckigen, insbesondere quadratischen Querschnitt. Außerdem ist es möglich, dass die Welle 21 in Längsrichtung verlaufende Nuten 200 aufweist. Die Welle 22 ist als Keilwelle ausgebildet. Die Welle 24 ist an ihrem Außenumfang mit scharfkantigen Zähnen 201 versehen, die sich beim Aufstecken des Formteils 29 auf die Welle 24 in das Formteil 29 eindrücken. Die Formteile 25, 26, 27 und 28 sind an ihrem Außenumfang mit scharfkantigen Zähnen 202, 203 , 204 und 205 versehen. Die Zähne 202, 203, 204 und 205 drücken sich bei der Montage der Formteile 25, 26, 27 und 28 in die Welle ein. Das Formteil 29 ist jedoch an seinem Außenumfang vieleckig ausgebildet. Durch die scharfkantigen Zähne 201, 202, 203, 204 und 205 kann der Wischarm 12 in seiner optimalen Parkposition auf die Welle 13 montiert werden. Dazu wird der Wischarm 12. zunächst in seine optimale Parkposition ausgerichtet. Anschließend wird die Hülse 11 oder das Formteil 29 auf die scharfkantigen Zähne 201, 202, 203, 204 und 205 aufgedrückt. Das Aufdrücken auf die Zähne 201, 202, 203, 204 und 205 kann durch Anziehen der Mutter 17 mühelos geschehen.

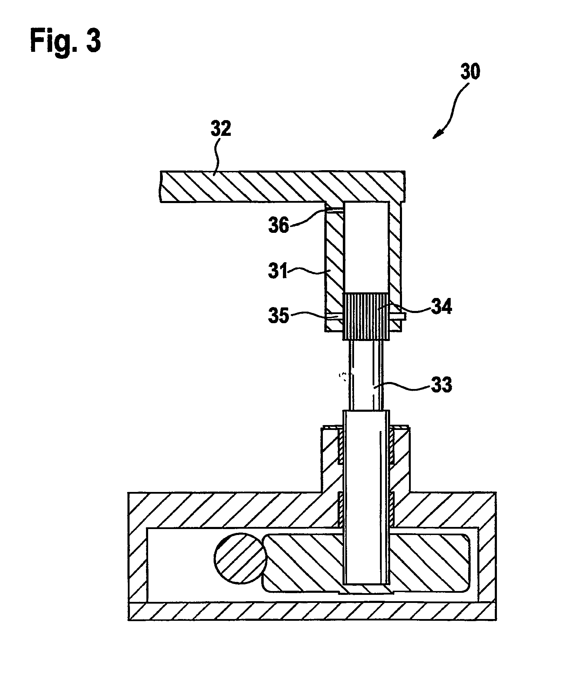

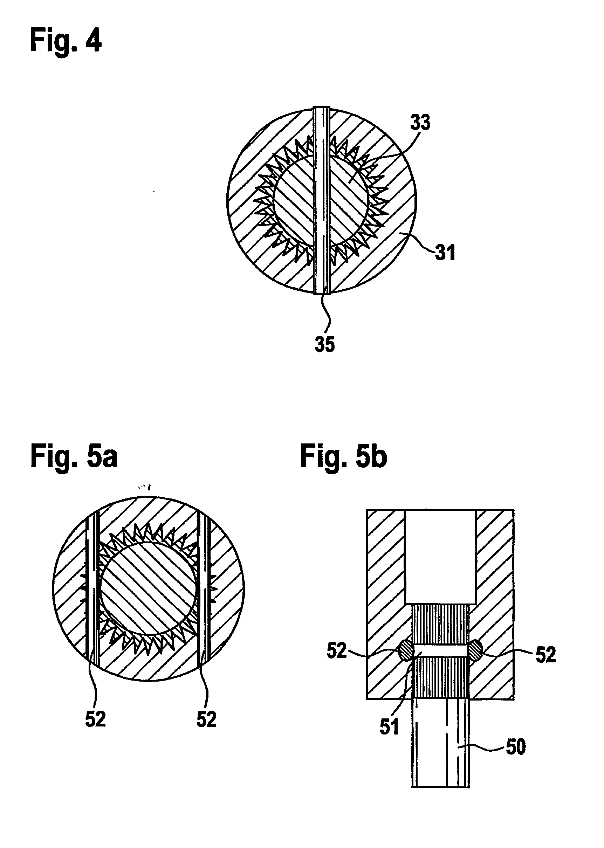

In Fig. 3 ist eine Scheibenwischvorrichtung 30 dargestellt, bei der eine Hülse 31 eines Wischarms 32 auf eine Welle 33 aufgesteckt ist. Die Hülse 31 ist mittels einer Rändelung 34 formschlüssig mit der Welle 33 verbunden, so dass Drehmomente von der Welle 33 auf den Wischarm 32 zuverlässig übertragen werden können. Durch die Hülse 31 und die Welle 33 ist ein Stift 35 gesteckt (siehe auch Fig. 4), der die Hülse 31 an der Welle 33 arretiert. Beim Aufprall einer Person auf den Wischarm 32 schert der Stift 35 zwischen der Hülse 31 und der Welle 33 ab. Folglich wird die Hülse 31 beim Aufprall nach unten über die Welle 33 geschoben. Außerdem weist die Hülse 31 eine Entlüftungsöffnung 36 auf. Durch sie kann beim Aufpressen des Wischarms 32 auf die Welle 33 während der Montage und beim Aufprall der Person auf den Wischarm 32 eine in der Hülse 31 vorhandene Luft entweichen.

In den Fign. 5a und 5b ist eine zweite Verstiftungsmöglichkeit dargestellt, bei der eine Welle 50 eine umlaufende Nut 51 aufweist, in die zwei Stifte 52 eingreifen. Beim Aufprall einer Person auf einen hier nicht gezeigten Wischarm werden die Stifte 52 zerstört.

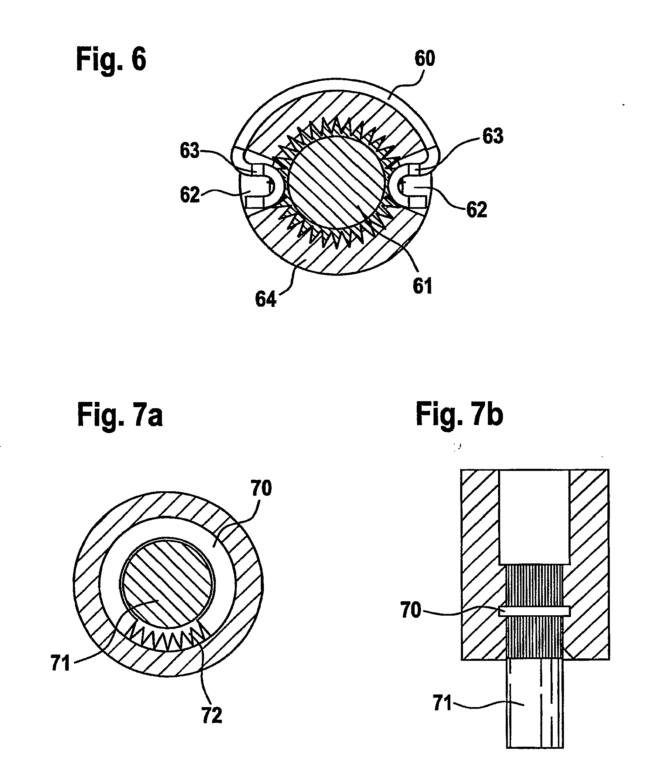

Fig. 6 zeigt ein Federelement 60, das auf eine Welle 61 aufgeschnappt ist, und diese somit umgreift. Die Welle 61 weist Aussparungen 62 auf, in die das Federelement 60 eingreifen kann. Die Welle 61 weist eine hier nicht näher dargestellte umlaufende Nut auf, in die das Federelement 60 ebenfalls eingreifen kann. Folglich arretiert das Federelement 60 eine Hülse 64 in axialer Richtung an der Welle 61. Das Federelement 60 weist als Sollbruchstellen dienende geschwächte Bereiche 63 auf. Beim Aufprall der Person auf den Wischarm bricht das Federelement 60 in den Bereichen 63, wodurch die Hülse 64 in Aufprallrichtung verschoben werden kann.

Die Fign. 7a und 7b zeigen ein Federelement 70, das auf eine hier nicht näher dargestellte Nut einer Welle 71 aufgeschnappt wird. Beim Aufprall der Person auf einen hier nicht gezeigten Wischarm kann sich das Federelement 70 in scharfe Zähne 72 der Welle 71 eingraben. Bei dieser Ausführungsform ist es zweckmäßig das Federelement aus Kunststoff zu fertigen, damit sich die Zähne 72 beim Aufprall leicht in das Federelement 70 eingraben können.

## Patentansprüche

1. Scheibenwischvorrichtung (10; 30), insbesondere für ein Kraftfahrzeug, mit mindestens einem Wischarm (12, 32), der mit mindestens einem Arretierelement an einer Welle (13, 33, 61, 71) arretiert ist, wobei das mindestens eine Arretierelement bei einem Aufprall auf den mindestens einen Wischarm (12, 32) zerstörbar ist, **dadurch gekennzeichnet, dass** der mindestens eine Wischarm (12, 32) eine über die Welle (13, 33, 61, 71) steckbare Hülse (11, 31, 64) aufweist.

2. Scheibenwischvorrichtung (10, 30) nach Anspruch 1, **dadurch gekennzeichnet, dass** die Welle (13, 33, 61, 71) mit dem mindestens einen Wischarm (12, 32) formschlüssig und/oder kraftschlüssig verbunden ist.

3. Scheibenwischvorrichtung (10, 30), nach Anspruch 2, **dadurch gekennzeichnet, dass** zwischen der Welle (13, 33, 61, 71) und der Hülse (11, 31, 64) ein Formteil (16, 25, 26, 27, 28, 29) angeordnet ist.

4. Scheibenwischvorrichtung (10) nach Anspruch 2 oder 3, **dadurch gekennzeichnet, dass** der Durchmesser der Welle (13) einen Absatz (15) aufweist, auf dem ein Innenrand (14) der Hülse (11) abstützbar ist.

5. Scheibenwischvorrichtung (10) nach einem der Ansprüche 2 bis 4, **dadurch gekennzeichnet, dass** der mindestens eine Wischarm (12) mit der Welle (13) verschraubt ist.

6. Scheibenwischvorrichtung (10) nach Anspruch 5, **dadurch gekennzeichnet, dass** die Welle (13) eine Gewindebohrung oder einen ein Außengewinde aufweisenden Abschnitt (18) aufweist.

7. Scheibenwischvorrichtung (10) nach einem der Ansprüche 3 bis 6, **dadurch gekennzeichnet, dass** ein Schraubenkopf oder eine Mutter (17) auf dem Formteil (16) anliegt.

8. Scheibenwischvorrichtung (30) nach Anspruch 2 oder 3, **dadurch gekennzeichnet, dass** durch die Hülse (31) und/oder die Welle (33) ein Stift (35, 52) gesteckt ist.

9. Scheibenwischvorrichtung (30) nach Anspruch 2 oder 3, **dadurch gekennzeichnet, dass** ein Federelement (60, 70) die Welle (33, 61, 71) mindestens teilweise umgreift, wobei das Federelement(60, 70) die Hülse (31, 64) an der Welle (33, 61, 71) in axialer Richtung arretiert.

10. Scheibenwischvorrichtung (30) nach Anspruch 8 oder 9, **dadurch gekennzeichnet, dass** der Stift (35, 52) und/oder das Federelement (60, 70) aus Kunststoff oder aus Metall gefertigt ist.

11. Scheibenwischvorrichtung (30) nach einem der Ansprüche 1 bis 10, **dadurch gekennzeichnet, dass** in der Hülse (31, 64) eine Entlüftungsöffnung (36) vorgesehen ist.

## Claims

1. Windscreen wiper device (10, 30), in particular for a motor vehicle, having at least one wiper arm (12, 32) which is locked with at least one locking element on a shaft (13, 33, 61, 71), with it being possible for the at least one locking element to be destroyed in the event of an impact against the at least one wiper arm (12, 32), **characterized in that** the at least one wiper arm (12, 32) has a sleeve (11, 31, 64) which can be plugged over the shaft (13, 33, 61, 71).

2. Windscreen wiper device (10, 30) according to Claim 1, **characterized in that** the shaft (13, 33, 61, 71) is connected to the at least one wiper arm (12, 32) in a form-fitting and/or force-fitting manner.

3. Windscreen wiper device (10, 30) according to Claim 2, **characterized in that** a moulded part (16, 25, 26, 27, 28, 29) is arranged between the shaft (13, 33, 61, 71) and the sleeve (11, 31, 64).

4. Windscreen wiper device (10) according to Claim 2 or 3, **characterized in that** the diameter of the shaft (13) has a step (15) on which an inner edge (14) of the sleeve (11) can be supported.

5. Windscreen wiper device (10) according to one of Claims 2 to 4, **characterized in that** the at least one wiper arm (12) is screwed to the shaft (13).

6. Windscreen wiper device (10) according to Claim 5, **characterized in that** the shaft (13) has a threaded bore or a section (18) which has an external thread.

7. Windscreen wiper device (10) according to one of Claims 3 to 6, **characterized in that** a screw head or a nut (17) bears against the moulded part (16).

8. Windscreen wiper device (30) according to Claim 2 or 3, **characterized in that** a pin (35, 52) is inserted through the sleeve (31) and/or the shaft (33).

9. Windscreen wiper device (30) according to Claim 2 or 3, **characterized in that** a spring element (60, 70) engages at least partially around the shaft (33, 61, 71), with the spring element (60, 70) locking the sleeve (31, 64) on the shaft (33, 61, 71) in the axial direction.

10. Windscreen wiper device (30) according to Claim 8 or 9, **characterized in that** the pin (35, 52) and/or the spring element (60, 70) are/is produced from plastic or from metal.

11. Windscreen wiper device (30) according to one of Claims 1 to 10, **characterized in that** a ventilation opening (36) is provided in the sleeve (31, 64).

## Revendications

1. Dispositif essuie-glace (10, 30), en particulier pour un véhicule automobile, comprenant au moins un bras d'essuie-glace (12, 32) qui est bloqué avec au moins un élément de blocage sur un arbre (13, 33, 61, 71), l'au moins un élément de blocage pouvant être détruit en cas de collision sur l'au moins un bras d'essuie-glace (12, 32), **caractérisé en ce que** l'au moins un bras d'essuie-glace (12, 32) présente une douille (11, 31, 64) pouvant être enfichée par-dessus l'arbre (13, 33, 61, 71).

2. Dispositif essuie-glace (10, 30) selon la revendication 1, **caractérisé en ce que** l'arbre (13, 33, 61, 71) est connecté à l'au moins un bras d'essuie-glace (12, 32) par engagement par correspondance géométrique et/ou par force.

3. Dispositif essuie-glace (10, 30) selon la revendication 2, **caractérisé en ce qu'**une pièce moulée (16, 25, 26, 27, 28, 29) est disposée entre l'arbre (13, 33, 61, 71) et la douille (11, 31, 64) .

4. Dispositif essuie-glace (10) selon la revendication 2 ou 3, **caractérisé en ce que** le diamètre de l'arbre (13) présente un épaulement (15) sur lequel peut s'appuyer un bord interne (14) de la douille (11).

5. Dispositif essuie-glace (10) selon l'une quelconque des revendications 2 à 4, **caractérisé en ce que** l'au moins un bras d'essuie-glace (12) est vissé à l'arbre (13).

6. Dispositif essuie-glace (10) selon la revendication 5, **caractérisé en ce que** l'arbre (13) présente un alésage fileté ou une portion (18) présentant un filetage extérieur.

7. Dispositif essuie-glace (10) selon l'une quelconque des revendications 3 à 6, **caractérisé en ce qu'**une tête de vis ou un écrou (17) s'applique sur la pièce moulée (16).

8. Dispositif essuie-glace (30) selon la revendication 2 ou 3, **caractérisé en ce qu'**une goupille (35, 52) est enfoncée à travers la douille (31) et/ou l'arbre (33).

9. Dispositif essuie-glace (30) selon la revendication 2 ou 3, **caractérisé en ce qu'**un élément de ressort (60, 70) vient en prise au moins en partie autour de l'arbre (33, 61, 71), l'élément de ressort (60, 70) bloquant la douille (31, 64) contre l'arbre (33, 61, 71) dans la direction axiale.

10. Dispositif essuie-glace (30) selon la revendication 8 ou 9, **caractérisé en ce que** la goupille (35, 52) et/ou l'élément de ressort (60, 70) sont fabriqués en plastique ou en métal.

11. Dispositif essuie-glace (30) selon l'une quelconque des revendications 1 à 10, **caractérisé en ce qu'**une ouverture de désaérage (36) est prévue dans la douille (31, 64).
